# EUROPÄISCHE PATENTANMELDUNG

(11) **EP 3 909 820 A1**
(43) Veröffentlichungstag der Anmeldung: **17.11.2021**
(21) Anmeldenummer: 20465525.2
(22) Anmeldetag: 15.05.2020
(51) Int. Cl.: B60T 17/02, B60T 17/22, B60T 8/40

(54) **VERFAHREN ZUM ÜBERPRÜFEN EINES ELEKTROMOTORS EINES BREMSSYSTEMS EINES KRAFTFAHRZEUGS, BREMSSYSTEM UND SPEICHERMEDIUM**

(71) Anmelder: Continental Teves AG & Co. OHG, 60488 Frankfurt am Main (DE)
(72) Erfinder: Murakami, Atsushi, 60488 Frankfurt am Main (DE); Kosshof, Daniel, 60488 Frankfurt am Main (DE); Burkhard, Dieter, 60488 Frankfurt am Main (DE); Sadek, Salah, 60488 Frankfurt am Main (DE); Burcea, Marian, 60488 Frankfurt am Main (DE); Ilchmann, Björn, 60488 Frankfurt am Main (DE); Baechle, Martin, 60488 Frankfurt am Main (DE)

(57) **Zusammenfassung**

Die Erfindung betrifft ein Verfahren zum Überprüfen eines Elektromotors eines Bremssystems eines Kraftfahrzeugs, wobei der Elektromotor bei Inbetriebnahme mittels eines Stroms überprüft wird, bei welchem sich der Elektromotor nicht dreht. Die Erfindung betrifft des Weiteren ein zugehöriges Bremssystem sowie ein zugehöriges Speichermedium.

## Beschreibung

Die Erfindung betrifft ein Verfahren zum Überprüfen eines Elektromotors eines Bremssystems eines Kraftfahrzeugs sowie ein zugehöriges Bremssystem und ein zugehöriges Speichermedium.

Bremssysteme werden beispielsweise in Kraftfahrzeugen verwendet, um diese zu verzögern. Moderne Bremssysteme weisen dabei typischerweise nicht nur Möglichkeiten zur manuellen Druckerzeugung mittels eines Bremspedals auf, sondern verfügen darüber hinaus über Pumpen oder andere Druckerzeuger, welche von einem Elektromotor angetrieben werden und fahrerunabhängig Bremsdruck aufbauen können. Dadurch kann beispielsweise eine vom Fahrer ausgelöste Bremswirkung unterstützt werden oder es kann fahrerunabhängig ein Bremseingriff erfolgen, beispielsweise wenn das Kraftfahrzeug ganz oder teilweise unter der Kontrolle eines Fahrassistenzsystems steht und dieses einen Bremseingriff wünscht.

Es ist bekannt, einen Elektromotor nach Inbetriebnahme eines Bremssystems zu überprüfen, so dass seine Funktionalität während des Betriebs eines Kraftfahrzeugs zuverlässig zur Verfügung steht.

Bei derzeit bekannten Ausführungen ist es üblich, dass ein solcher Elektromotor nach einer Inbetriebnahme des Bremssystems bei einer Geschwindigkeit von etwa 10 km/h überprüft wird, um zu bestätigen, dass der Motor funktionstüchtig ist. Eine solche Überprüfung wird auch als "Comfort Initial Check" bezeichnet, wobei der Elektromotor typischerweise für weniger als eine Umdrehung gedreht wird. Danach wird eine elektromotorische Kraft gemessen, um zu überprüfen, ob der Motor korrekt funktioniert. Außerdem wird anschließend ein Druckausgleich durchgeführt, um das Ausbilden eines Vakuums auf einer Saugseite der Pumpe zu verhindern, was zu einem möglichen Lufteintrag in ein Bremsfluid führen könnte.

Es wurde jedoch erkannt, dass sowohl der Überprüfungsvorgang wie auch der nachfolgende Druckausgleich zu hörbaren Geräuschen führen können, was von Fahrern unter Umständen als Fehlfunktion wahrgenommen wird.

Es ist deshalb eine Aufgabe der Erfindung, ein Verfahren zum Überprüfen eines Elektromotors eines Bremssystems eines Kraftfahrzeugs vorzusehen, welches alternativ, insbesondere ohne oder mit geringerer Störwirkung, ausgeführt wird. Es sind des Weiteren Aufgaben der Erfindung, ein zugehöriges Bremssystem sowie ein zugehöriges Speichermedium vorzusehen.

Dies wird erfindungsgemäß durch ein Verfahren, ein Bremssystem und ein Speichermedium gemäß den jeweiligen Hauptansprüchen erreicht. Der Inhalt der Ansprüche wird durch ausdrückliche Inbezugnahme zum Inhalt der Beschreibung gemacht.

Die Erfindung betrifft ein Verfahren zum Überprüfen eines Elektromotors eines Bremssystems eines Kraftfahrzeugs. Das Bremssystem weist zumindest einen Elektromotor und eine vom Elektromotor angetriebene Pumpe auf. Der Elektromotor wird bei jeder Inbetriebnahme dadurch überprüft, dass durch den Elektromotor für eine erste Zeitdauer ein erster Strom geleitet wird, bei welchem sich insbesondere der Elektromotor nicht dreht.

Mittels eines solchen Überprüfungsverfahrens kann der Elektromotor bei jeder Inbetriebnahme überprüft werden, ohne dass störende Geräusche entstehen. Durch den Verzicht auf eine Drehung wird weder beim unmittelbaren Test ein Geräusch erzeugt noch ist nachfolgend ein Druckausgleich nötig. Somit werden die bei Ausführungen gemäß dem Stand der Technik vorhandenen potenziellen Geräuschquellen eliminiert.

Das Verfahren kann insbesondere dazu geeignet sein, auf einem wie beschrieben ausgebildeten Bremssystem ausgeführt zu werden. Dieses weist wie erwähnt typischerweise einen Elektromotor und eine vom Elektromotor angetriebene Pumpe auf. Es kann insbesondere noch weitere Komponenten wie beispielsweise Ventile oder einen Hauptbremszylinder aufweisen. Ein Hauptbremszylinder wird typischerweise unmittelbar von einem Fahrer über ein Bremspedal betätigt, wobei in dem Hauptbremszylinder ein hydraulischer Druck manuell erzeugt werden kann. Die Pumpe kann einen solchen Druckaufbau unterstützen, d.h. zusätzlichen Druck erzeugen, kann jedoch auch zu einem vom Hauptbremszylinder unabhängigen Druckaufbau verwendet werden. Auch andere Ausführungen von Bremssystemen sind jedoch möglich. Die Pumpe kann insbesondere eine hydrodynamisch wirkende Kolbenpumpe sein.

Der erste Strom kann insbesondere durch den Motor geleitet werden, während das Kraftfahrzeug stillsteht. Dies ermöglicht eine Überprüfung des Bremssystems noch bevor das Kraftfahrzeug losfährt, so dass sichergestellt ist, dass die Überprüfung abgeschlossen ist, wenn sich das Kraftfahrzeug bewegt und ein eventueller Bremseingriff notwendig wird.

Unter einer Inbetriebnahme kann insbesondere ein Aktivieren einer Zündung des Kraftfahrzeugs oder ein anderweitiges Betätigen eines Hauptschalters oder Zündschlosses verstanden werden. Die Inbetriebnahme erfolgt typischerweise, wenn das Kraftfahrzeug abgestellt oder geparkt war und nunmehr wieder losfahren soll.

Der erste Strom kann insbesondere pulsweitenmoduliert sein. Dies erlaubt eine einfache und genaue Anpassung einer gewünschten Stromstärke und/oder Leistung. Spannung, Stromstärke und/oder Leistung können insbesondere so niedrig sein, dass eine Drehung vermieden wird. Die Drehung kann sich insbesondere auf eine Drehung einer Welle des Elektromotors beziehen.

Der erste Strom kann insbesondere mit einem Tastgrad zwischen 6 % und 10 % pulsweitenmoduliert sein. Er kann auch mit einem Tastgrad von mindestens 6 % und/oder mit einem Tastgrad von höchstens 10 % pulsweitenmoduliert sein. Insbesondere bevorzugt kann er mit einem Tastgrad von 8 % pulsweitenmoduliert sein. Derartige Tastgrade haben sich für typische Anwendungen als vorteilhaft erwiesen, es sei jedoch erwähnt, dass auch andere Tastgrade je nach Anwendungsfall möglich sind. Eine Taktfrequenz kann hierbei beispielsweise mindestens 16 kHz oder höchstens 20 kHz, oder insbesondere 18kHz, betragen.

Die erste Zeitdauer kann insbesondere zwischen 0,5 ms und 1,5 ms liegen. Sie kann auch mindestens 0,5 ms und/oder höchstens 1,5 ms betragen. Insbesondere bevorzugt kann sie 1 ms betragen. Derartige Werte haben sich für typische Anwendungsfälle als vorteilhaft erwiesen, es können jedoch auch andere Werte verwendet werden.

Der Elektromotor kann gemäß einer bevorzugten Ausführung nach der Inbetriebnahme periodisch wiederholt dadurch überprüft werden, dass durch den Elektromotor für die erste Zeitdauer der erste Strom geleitet wird, bei welchem sich der Elektromotor nicht dreht. Der Elektromotor kann somit nicht nur unmittelbar nach Inbetriebnahme, sondern regelmäßig überprüft werden, wodurch die Sicherheit weiter erhöht werden kann. Dies kann beispielsweise bei autonom fahrenden Fahrzeugen besonders relevant sein, wenn diese über einen längeren Zeitraum betrieben werden. Die periodisch wiederholte Überprüfung kann beispielsweise in bestimmten Zeitabständen durchgeführt werden, welche insbesondere mindestens 10 s und/oder höchstens 30 s oder bevorzugt 20 s betragen können.

Gemäß einer bevorzugten Ausführung wird nach jeder Inbetriebnahme ansprechend darauf, dass mindestens ein vorbestimmtes Auslösekriterium erfüllt wird, das Bremssystem dadurch überprüft, dass für eine zweite Zeitdauer durch den Elektromotor ein zweiter Strom geleitet wird, bei welchem sich der Elektromotor dreht.

Dies ermöglicht es, dass eine zusätzliche Überprüfung durchgeführt wird, welche beispielsweise so gestaltet sein kann, wie dies bei Ausführungen gemäß dem Stand der Technik üblich ist. Das Bremssystem wird somit zweimal überprüft, wobei die bereits weiter oben erwähnte Überprüfung ohne Drehung des Elektromotors insbesondere unmittelbar nach Inbetriebnahme und noch vor einer Bewegung des Kraftfahrzeugs durchgeführt werden kann, wohingegen die Überprüfung mit Drehung des Elektromotors beispielsweise zu einem späteren Zeitpunkt durchgeführt werden kann, an welchem eventuell entstehende Geräusche nicht oder kaum mehr wahrnehmbar sind. Bei Fahrt eines Kraftfahrzeugs sind üblicherweise Fahrgeräusche, Motorgeräusche und Windgeräusche vorhanden, welchen sich eventuelle Geräusche der Überprüfung überlagern, wodurch letztere nicht oder kaum mehr wahrnehmbar sind.

Die Überprüfung, welche ansprechend auf das Auslösekriterium durchgeführt wird, kann insbesondere eine gepulste Ansteuerung des Elektromotors mit Impulsen von beispielsweise mindestens 1 ms und/oder höchstens 6 ms bei einer Periodendauer von beispielsweise 10 ms beinhalten. Die zweite Zeitdauer kann beispielsweise fest vorgegeben oder auch variabel sein, sie kann beispielsweise auch von einem vorgegebenen Abbruchkriterium abhängig sein. Beispielsweise kann sie eine Länge von 30 ms haben.

Gemäß einer Ausführung kann als ein Auslösekriterium verwendet werden, dass eine Geschwindigkeit des Kraftfahrzeugs einen Geschwindigkeitsschwellenwert übersteigt. Somit kann die Überprüfung mit Drehung des Elektromotors bei einer bestimmten Geschwindigkeit durchgeführt werden, insbesondere bei einer solchen, bei welcher Fahr-, Wind- und Motorengeräusch ein eventuelles Geräusch, das bei der Überprüfung entsteht, überdecken.

Der Geschwindigkeitsschwellenwert kann beispielsweise zwischen 20 km/h und 40 km/h betragen. Er kann insbesondere mindestens 20 km/h oder höchstens 40 km/h betragen, und er kann beispielsweise bei 30 km/h liegen. Derartige Werte haben sich für typische Anwendungen als vorteilhaft erwiesen, es können jedoch auch andere Werte verwendet werden.

Gemäß einer Ausführung kann als ein Auslösekriterium verwendet werden, dass das Kraftfahrzeug eine vorbestimmte Strecke seit dem letzten Durchleiten des zweiten Stroms gefahren ist. Die vorbestimmte Strecke kann insbesondere zwischen 50 km und 100 km betragen. Sie kann beispielsweise mindestens 50 km und/oder höchstens 100 km betragen. Insbesondere kann sie 75 km betragen.

Derartige Werte haben sich für typische Anwendungen als vorteilhaft erwiesen, es können jedoch auch andere Werte verwendet werden. Durch die Verwendung einer vorbestimmten Strecke als Auslösekriterium kann sichergestellt werden, dass das Bremssystem auch dann, wenn das Kraftfahrzeug beispielsweise über einen längeren Zeitraum und über mehrere Inbetriebnahmen hinweg mit niedriger Geschwindigkeit fährt, der Elektromotor trotzdem mit Drehung überprüft wird. Dies erhöht die Sicherheit, wobei in diesem Fall eine Geräuschentwicklung, die eventuell wahrnehmbar ist, in Kauf genommen wird.

Gemäß einer Ausführung wird als ein Auslösekriterium verwendet, dass seit dem letzten Durchleiten des zweiten Stroms eine vorbestimmte Zeit vergangen ist. Die vorbestimmte Zeit kann beispielsweise zwischen 600 Stunden und 800 Stunden betragen. Die vorbestimmte Zeit kann auch mindestens 600 Stunden oder höchstens 800 Stunden betragen. Sie kann bevorzugt 720 Stunden betragen. Dies entspricht in etwa einem Monat. Durch die Verwendung einer vorbestimmten Zeit als Auslösekriterium kann sichergestellt werden, dass der Elektromotor auch dann mit Drehung überprüft wird, wenn das Kraftfahrzeug beispielsweise längere Zeit und auch über mehrere Inbetriebnahmen hinweg mit geringer Geschwindigkeit fährt. Auch in diesem Fall wird die Sicherheit erhöht.

Durch die vorbestimmte Strecke und/oder die vorbestimmte Zeit kann insbesondere die Überprüfung auch über Standzeiten und Inbetriebnahmen hinweg sichergestellt werden. Steht ein Kraftfahrzeug beispielsweise längere Zeit und fährt dann nur mit niedriger Geschwindigkeit, wird trotzdem rechtzeitig überprüft. Ein Kilometerstand und/oder ein Zeitpunkt der letzten Überprüfung mit dem zweiten Strom kann hierfür vorteilhaft abgespeichert werden.

Insbesondere kann vorgesehen sein, dass die Überprüfung mit sich drehendem Elektromotor bzw. mit dem zweiten Strom ansprechend darauf ausgeführt wird, dass mindestens eines der implementierten Auslösekriterien erfüllt wird. Dabei können beispielsweise alle genannten Auslösekriterien implementiert sein, oder es kann auch nur ein Teil oder eines der Auslösekriterien implementiert sein.

Insbesondere kann nach Durchleiten des zweiten Stroms ein Ventil zum Druckausgleich der Pumpe geöffnet werden. Dadurch kann verhindert werden, dass aufgrund eines entstehenden oder entstandenen Vakuums ein Lufteintrag in eine Bremsflüssigkeit erfolgt. Insbesondere kann vorgesehen sein, dass während des Durchleitens des zweiten Stroms für die zweite Zeitdauer der Elektromotor höchstens eine Umdrehung ausführt. Dadurch kann die Wirkung der Drehung begrenzt werden.

Nach der Drehung des Elektromotors aufgrund des Durchleitens des zweiten Stroms kann insbesondere eine vom Elektromotor erzeugte Generatorspannung gemessen werden. Diese kann ausgewertet werden, beispielsweise mit einem Schwellenwert verglichen werden. Ist die Generatorspannung in erwarteter Höhe vorhanden, so ist dies ein zuverlässiger Indikator dafür, dass der Elektromotor korrekt angesteuert wird und funktioniert. Ist die Generatorspannung dagegen zu gering oder nicht vorhanden, deutet dies auf einen Fehlerfall hin.

Bevorzugt kann vorgesehen sein, dass während des Durchleitens des ersten Stroms und/oder des zweiten Stroms eine Kurzschlusserkennung am Elektromotor und/oder an einem Treiber des Elektromotors ausgeführt wird. Insbesondere kann dabei eine Spannung über einem Treiber des Elektromotors gemessen werden. Übersteigt diese einen Schwellenwert und/oder steigt sie zu schnell an kann ein Fehler, hier ein Kurzschluss, detektiert werden. Die Kurzschlusserkennung kann auch zu sonstigen Zeiten aktiv sein, also nicht nur während der erste Strom oder der zweite Strom durchgeleitet werden.

Bevorzugt kann vorgesehen sein, dass während des Durchleitens des ersten Stroms eine Überwachung einer Versorgungsspannung des Elektromotors ausgeführt wird. Die Versorgungsspannung ist dabei typischerweise diejenige Spannung, welche als Eingangsspannung einer Leistungsversorgung des Elektromotors dient. Sie wird typischerweise als Klemme 30P bezeichnet. Fällt sie betragsmäßig unter einen vorgegebenen Schwellenwert oder ist sie nicht vorhanden kann ein Fehler detektiert werden. Die Überwachung der Versorgungsspannung kann jedoch auch zu anderen Zeiten aktiv sein.

Bevorzugt kann vorgesehen sein, dass nach dem Durchleiten des ersten Stroms eine Abrisserkennung am Elektromotor ausgeführt wird. Diese kann detektieren, wenn kein Strom durch den Elektromotor fließt, was insbesondere darauf hinweisen kann, dass kein Elektromotor vorhanden ist oder eine elektrische Leitung unterbrochen ist. Auch eine solche Abrisserkennung kann auch zu anderen Zeiten aktiv sein.

Die Erfindung betrifft des Weiteren ein Bremssystem. Das Bremssystem weist einen Elektromotor auf. Es weist ferner eine Pumpe auf, welche von dem Elektromotor antreibbar ist. Das Bremssystem weist eine Steuerungsvorrichtung auf, welche dazu konfiguriert ist, ein erfindungsgemäßes Verfahren auszuführen. Bezüglich des Verfahrens kann auf alle hierin beschriebenen Ausführungen und Varianten zurückgegriffen werden.

Die Erfindung betrifft des Weiteren ein nichtflüchtiges computerlesbares Speichermedium, welches dazu konfiguriert ist, ein erfindungsgemäßes Verfahren auszuführen. Bezüglich des Verfahrens kann auf alle hierin beschriebenen Ausführungen und Varianten zurückgegriffen werden.

Allgemein sei erwähnt, dass mittels des hierin beschriebenen Verfahrens eine Drehung eines Elektromotors und/oder einer Pumpe in einem geräuschsensiblen Geschwindigkeitsbereich vermieden werden kann. Auch eine eventuelle Geräuscherzeugung durch einen Druckausgleich kann in einem solchen geräuschsensiblen Geschwindigkeitsbereich vermieden werden. Dies kann beispielsweise dadurch erreicht werden, dass der Elektromotor bzw. die Pumpe mit derart niedriger Energie angesteuert wird, dass der Elektromotor sich nicht dreht. Trotzdem ist es möglich, die Ansteuerbarkeit des Elektromotors zu überprüfen. Aufgrund der fehlenden Drehung entsteht weder durch eine eventuelle Drehung noch durch einen Druckausgleich ein störendes Geräusch.

Anschließend kann beispielsweise in einem nicht geräuschsensiblen Geschwindigkeitsbereich eine Überprüfung mit sich drehendem Elektromotor durchgeführt werden, beispielsweise bei 30 km/h oder auch bei einer anderen Geschwindigkeit. Um den Fall zu vermeiden, dass die Überprüfung für einen längeren Zeitraum nicht durchgeführt wird, beispielsweise wenn das Kraftfahrzeug für einen längeren Zeitraum oder eine längere Strecke mit besonders niedriger Geschwindigkeit fährt, kann eine solche Überprüfung mit sich drehendem Elektromotor beispielsweise auch bei einer Geschwindigkeit von 10 km/h oder einer anderen Geschwindigkeit durchgeführt werden, wenn das Kraftfahrzeug eine vorbestimmte Strecke gefahren ist, beispielsweise 75 km.

Weitere Merkmale und Vorteile wird der Fachmann dem mit Bezug auf die beigefügte Zeichnung beschriebenen Ausführungsbeispiel entnehmen. Dabei zeigt:

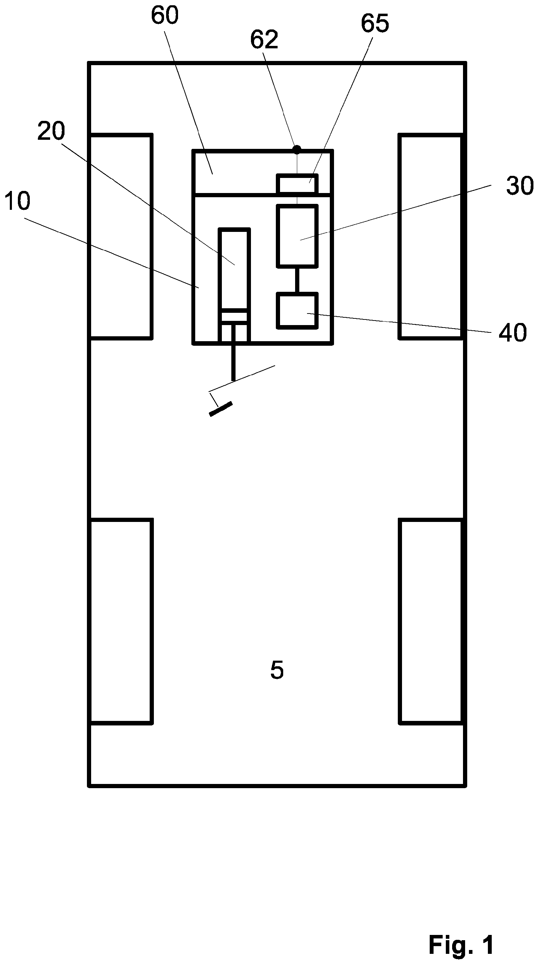

- Fig. 1:: ein Kraftfahrzeug.

Fig. 1 zeigt ein Kraftfahrzeug 5 mit einem Bremssystem 10 gemäß einem Ausführungsbeispiel der Erfindung. Das Bremssystem 10 weist einen Hauptbremszylinder 20 auf, welcher wie gezeigt zu einer manuellen Bremsdruckerzeugung über ein Bremspedal dient. Das Bremssystem 10 weist ferner einen Elektromotor 30 und eine vom Elektromotor 30 angetriebene Pumpe 40 auf. Dadurch kann fahrerunabhängig ein Druck erzeugt werden, welcher beispielsweise zur Verstärkung eines fahrererzeugten Drucks oder auch für einen fahrerunabhängigen Druckaufbau verwendet werden kann. Das Bremssystem 10 weist ferner eine Steuerungsvorrichtung 60 auf, welche dazu konfiguriert ist, ein erfindungsgemäßes Verfahren auszuführen. Hierauf wird nachfolgend eingegangen werden. Rein schematisch ist dargestellt, dass in der Steuerungsvorrichtung 60 ein Treiber 65 für den Elektromotor 30 angeordnet ist. Dieser ist an einem Versorgungsspannungseingang 62 angeschlossen, über welchen eine Versorgungsspannung für den Elektromotor 30 bezogen wird.

Es sei darauf hingewiesen, dass das Kraftfahrzeug 5 und das Bremssystem 10 hier lediglich rein schematisch dargestellt sind und insbesondere die Funktionalität beschrieben wird, welche sich auf Überprüfungen des Bremssystems 10 bzw. dessen Elektromotors 30 bezieht.

Das Kraftfahrzeug 5 wird nach einer Standzeit typischerweise durch Aktivieren einer Zündung in Betrieb genommen. Hierfür können unterschiedliche Verfahren verwendet werden, beispielsweise ein Umdrehen eines Schlüssels in einem Zündschloss, das Betätigen eines Knopfs oder das Erkennen eines Identifikationsmittels wie beispielsweise einer drahtlos erkennbaren Karte.

Unmittelbar nach der Inbetriebnahme wird durch die Steuerungsvorrichtung 60 eine Überprüfung des Elektromotors 30 durchgeführt. Hierzu wird für eine vorbestimmte erste Zeitdauer ein erster Strom durch den Elektromotor 30 geleitet. Dieser erste Strom ist pulsweitenmoduliert, und zwar vorliegend mit einem Tastgrad von 8 %. Bei anderen Auslegungen von Bremssystemen können andere Tastgrade verwendet werden. Die erste Zeitdauer beträgt dabei vorliegend 1 ms, wobei auch hier andere Werte möglich sind.

Die eben beschriebene Überprüfung wird dabei mit einer Stromstärke durchgeführt, welche so gering ist, dass sich der Elektromotor 30 bzw. dessen Welle und damit auch die Pumpe 40 nicht drehen. Dadurch wird verhindert, dass unerwünschte Geräusche entstehen oder dass in der Pumpe 40 ein Vakuum entstehen würde, welches durch einen Druckausgleich ausgeglichen werden müsste.

Während der Überprüfung ist eine Kurzschlusserkennung aktiv. Diese überwacht eine Spannung an dem Treiber 65 des Elektromotors 30. Steigt diese zu schnell an wird ein Fehlerfall erkannt. Des Weiteren wird auch eine Versorgungsspannung am Versorgungsspannungseingang 62 überwacht und es wird nach der Überprüfung eine Abtrisserkennung am Elektromotor 30 durchgeführt. Damit kann erkannt werden, ob der Elektromotor 30 ordnungsgemäß versorgt wird und ob Strom durch den Elektromotor 30 fließt. Sollte eine der Überprüfungen eine Abweichung von erwarteten Werten ergeben, wird ein Fehlerzustand erkannt und dementsprechend ein Hinweis an den Fahrer ausgegeben, dass dieser vorsichtig fahren soll und eine Werkstatt aufsuchen soll.

Hat das Kraftfahrzeug 5 eine Geschwindigkeit von vorliegend 30 km/h erreicht, so wird eine weitere Überprüfung ausgeführt. Bei dieser wird ein zweiter Strom durch den Elektromotor 30 geleitet, welcher dazu führt, dass dieser sich dreht und damit auch die Pumpe 40 betätigt wird. Nach einer solchen Überprüfung ist ein Druckausgleich an der Pumpe 40 durchzuführen, welcher gegebenenfalls hörbar ist, ebenso wie die Drehung des Elektromotors 30. Aufgrund der bereits erreichten Geschwindigkeit des Kraftfahrzeugs 5 ist dies jedoch nicht oder kaum für Insassen wahrnehmbar.

Sollte das Kraftfahrzeug 5 für längere Zeit oder für eine längere Strecke mit sehr niedriger Geschwindigkeit von beispielsweise weniger als 30 km/h fahren, so wird die eben beschriebene Überprüfung ebenfalls durchgeführt. Dadurch wird sichergestellt, dass die Überprüfung mit sich drehendem Elektromotor auch in solchen Situationen erfolgt, wodurch die Sicherheit erhöht wird. Eine eventuelle Geräuschbelästigung kann in diesen Fällen in Kauf genommen werden.

Erwähnte Schritte des erfindungsgemäßen Verfahrens können in der angegebenen Reihenfolge ausgeführt werden. Sie können jedoch auch in einer anderen Reihenfolge ausgeführt werden, soweit dies technisch sinnvoll ist. Das erfindungsgemäße Verfahren kann in einer seiner Ausführungen, beispielsweise mit einer bestimmten Zusammenstellung von Schritten, in der Weise ausgeführt werden, dass keine weiteren Schritte ausgeführt werden. Es können jedoch grundsätzlich auch weitere Schritte ausgeführt werden, auch solche welche nicht erwähnt sind.

Es sei darauf hingewiesen, dass in den Ansprüchen und in der Beschreibung Merkmale in Kombination beschrieben sein können, beispielsweise um das Verständnis zu erleichtern, obwohl diese auch separat voneinander verwendet werden können. Der Fachmann erkennt, dass solche Merkmale auch unabhängig voneinander mit anderen Merkmalen oder Merkmalskombinationen kombiniert werden können.

Rückbezüge in Unteransprüchen können bevorzugte Kombinationen der jeweiligen Merkmale kennzeichnen, schließen jedoch andere Merkmalskombinationen nicht aus.

## Patentansprüche

1. Verfahren zum Überprüfen eines Elektromotors (30) eines Bremssystems (10) eines Kraftfahrzeugs (5),
- wobei das Bremssystem (10) zumindest den Elektromotor (30) und eine vom Elektromotor (30) angetriebene Pumpe (40) aufweist,
- wobei der Elektromotor (30) bei jeder Inbetriebnahme dadurch überprüft wird, dass durch den Elektromotor (30) für eine erste Zeitdauer ein erster Strom geleitet wird, bei welchem sich der Elektromotor (30) nicht dreht.

2. Verfahren nach Anspruch 1,
- wobei der erste Strom durch den Elektromotor (30) geleitet wird, während das Kraftfahrzeug (5) stillsteht.

3. Verfahren nach einem der vorhergehenden Ansprüche,
- wobei der erste Strom pulsweitenmoduliert ist;
und/oder
- wobei der erste Strom mit einem Tastgrad zwischen 6 % und 10 %, oder 8 %, pulsweitenmoduliert ist.

4. Verfahren nach einem der vorhergehenden Ansprüche,
- wobei der Elektromotor (30) nach der Inbetriebnahme periodisch wiederholt dadurch überprüft wird, dass durch den Elektromotor (30) für die erste Zeitdauer der erste Strom geleitet wird, bei welchem sich der Elektromotor (30) nicht dreht.

5. Verfahren nach einem der vorhergehenden Ansprüche,
- wobei die erste Zeitdauer zwischen 0,5 ms und 1,5 ms, oder 1 ms, beträgt.

6. Verfahren nach einem der vorhergehenden Ansprüche,
- wobei nach jeder Inbetriebnahme ansprechend darauf, dass mindestens ein vorbestimmtes Auslösekriterium erfüllt wird, das Bremssystem (10) dadurch überprüft wird, dass für eine zweite Zeitdauer durch den Elektromotor (30) ein zweiter Strom geleitet wird, bei welchem sich der Elektromotor (30) dreht.

7. Verfahren nach Anspruch 6,
- wobei als ein Auslösekriterium verwendet wird, dass eine Geschwindigkeit des Kraftfahrzeugs (5) einen Geschwindigkeitsschwellenwert übersteigt.

8. Verfahren nach Anspruch 7,
- wobei der Geschwindigkeitsschwellenwert zwischen 20 km/h und 40 km/h, oder bei 30 km/h, liegt.

9. Verfahren nach einem der Ansprüche 6 bis 8,
- wobei als ein Auslösekriterium verwendet wird, dass das Kraftfahrzeug (5) eine vorbestimmte Strecke seit dem letzten Durchleiten des zweiten Stroms gefahren ist;
und/oder
- wobei als ein Auslösekriterium verwendet wird, dass eine vorbestimmte Zeit seit dem letzten Durchleiten des zweiten Stroms vergangen ist.

10. Verfahren nach Anspruch 9,
- wobei die vorbestimmte Strecke zwischen 50 km und 100 km, oder 75 km, beträgt;
und/oder
- wobei die vorbestimmte Zeit zwischen 600 Stunden und 800 Stunden, oder 720 Stunden, beträgt.

11. Verfahren nach einem der vorhergehenden Ansprüche,
- wobei während des Durchleitens des ersten Stroms und/oder des zweiten Stroms eine Kurzschlusserkennung am Elektromotor (30) und/oder an einem Treiber (65) des Elektromotors (30) ausgeführt wird.

12. Verfahren nach einem der vorhergehenden Ansprüche,
- wobei während des Durchleitens des ersten Stroms eine Überwachung einer Versorgungsspannung des Elektromotors (30) ausgeführt wird.

13. Verfahren nach einem der vorhergehenden Ansprüche,
- wobei nach dem Durchleiten des ersten Stroms eine Abrisserkennung am Elektromotor (30) ausgeführt wird.

14. Bremssystem (10), aufweisend
- einen Elektromotor (30),
- eine Pumpe (40), welche von dem Elektromotor (30) antreibbar ist, und
- eine Steuerungsvorrichtung (60), welche dazu konfiguriert ist, ein Verfahren nach einem der vorhergehenden Ansprüche auszuführen.

15. Nichtflüchtiges computerlesbares Speichermedium, welches dazu konfiguriert ist, ein Verfahren nach einem der Ansprüche 1 bis 13 auszuführen.
